# EUROPÄISCHE PATENTSCHRIFT

(11) **EP 3 472 560 B1**
(45) Veröffentlichungstag und Bekanntmachung des Hinweises auf die Patenterteilung: **04.08.2021**
(21) Anmeldenummer: 17721380.8
(22) Anmeldetag: 04.05.2017
(51) Int. Cl.: G01C 21/32

(54) **AKTUALISIERUNG VON NAVIGATIONSDATEN**
NAVIGATION DATA UPDATE
MISE A JOUR DE DONNÉES DE NAVIGATION

(30) Priorität: 16.06.2016 DE 102016210745
(43) Veröffentlichungstag der Anmeldung: 24.04.2019
(73) Patentinhaber: Robert Bosch GmbH, 70442 Stuttgart (DE)
(72) Erfinder: EWERT, Marlon Ramon, 74199 Untergruppenbach (DE)
(86) Internationale Anmeldenummer: PCT/EP2017/060656
(87) Internationale Veröffentlichungsnummer: WO 2017/215829

(56) Entgegenhaltungen:
- US-A1- 2006 111 837
- US-A1- 2010 106 412

## Beschreibung

Die Erfindung betrifft die Aktualisierung von Navigationsdaten. Insbesondere betrifft die Erfindung die Aktualisierung von Daten zur teilautonomen oder autonomen Steuerung eines Kraftfahrzeugs.

### Stand der Technik

Die US 2006/111837 A1 offenbart ein Navigationssystem in einem Fahrzeug, welches historische Positionsinformationen speichert.

Die US 2010/106412 A1 offenbart eine Datenverarbeitungsvorrichtung, wie beispielsweise ein Navigationssystem in einem Fahrzeug.

Ein Kraftfahrzeug kann ein Navigationssystem umfassen, um auf einem Straßennetz zwischen einer aktuellen Position und einer Zielposition geführt zu werden. Die Steuerung des Kraftfahrzeugs kann auf der Basis der Zielführung teilautonom oder autonom durchgeführt werden. Im teilautonomen Betrieb wird das Kraftfahrzeug in Längs- und Querrichtung vollständig automatisch gesteuert, ein Fahrer steht jedoch als Überwacher und nötigenfalls als Rückfallebene zur Verfügung. Im autonomen Betrieb wird die Führung des Kraftfahrzeugs nicht mehr durch den Fahrer überwacht, sodass sich dieser einer anderen Aufgabe widmen kann.

Die autonome oder teilautonome Steuerung des Kraftfahrzeugs kann schwierig sein, wenn Kartendaten des Navigationssystems nicht im Einklang mit einer Abtastung des Umfelds des Kraftfahrzeugs stehen. Besteht beispielsweise eine temporär geänderte Verkehrsführung, etwa im Bereich einer Baustelle, ein Streckenneubau oder eine Änderung der Verkehrsregelung im Bereich des Kraftfahrzeugs, so sind eine Planung der Route, auf der das Kraftfahrzeug geführt werden soll, und das Führen des Kraftfahrzeugs schwierig und es kann zu Fehlern oder nicht auflösbaren Situationen kommen.

Der Erfindung liegt daher die Aufgabe zugrunde, eine verbesserte Technik zur Aktualisierung von Navigationsdaten, insbesondere Kartendaten, anzugeben. Die

Erfindung löst diese Aufgabe mittels der Gegenstände der unabhängigen Ansprüche. Unteransprüche geben bevorzugte Ausführungsformen wieder.

### Offenbarung der Erfindung

Ein Verfahren ist in Anspruch 1 angegeben.

Durch das Verfahren kann bestimmt werden, dass das Kraftfahrzeug eine Straße befährt, die sich von einem bekannten Weg der Kartendaten unterscheidet. Dabei ist die Straße auf der Basis einer Abtastung seitens des Kraftfahrzeugs bereits als solche erkannt, sodass die Trajektorie unmittelbar zur Aktualisierung der Kartendaten verwendet werden kann. Das Aktualisieren kann daher schneller und mit verbesserter Genauigkeit erfolgen. Trajektorien, die keine Straße darstellen, beispielsweise eine Fahrt über einen Parkplatz, einen Fußgängerweg oder einen unbefestigten Weg, können für die Aktualisierung der Kartendaten außer Acht gelassen werden. Eine Straße, deren Verlauf bzw. Position sich geändert hat, etwa wegen Umwelteinflüssen oder einer Naturkatastrophe, kann dadurch schneller wieder mittels des Kraftfahrzeugs automatisiert befahrbar sein.

Es ist besonders bevorzugt, dass auf der Basis der Abtastung bestimmt wird, dass die Benutzung der Straße durch das Kraftfahrzeug zulässig ist. Dadurch kann ein erhöhter Schutz vor der Propagation von falschen oder nicht allgemein gültigen Kartendaten erzielt werden.

Es ist besonders bevorzugt, dass die Kartendaten nur aktualisiert werden, falls eine Vielzahl übereinstimmender Abweichungen bestimmt wurde. So kann vermieden werden, dass eine einmalige Fahrt auf einer Straße unter ungeklärten Randbedingungen bereits zu einer Aktualisierung der Kartendaten führt. Die aktualisierten Kartendaten können anderen Kraftfahrzeugen zur Verfügung gestellt werden, sodass eine inkorrekte Aktualisierung zur vielfachen Nutzung der Straße führen kann.

In einer Ausführungsform umfasst die Aktualisierung eine Klassifikation der Straße. Die Klassifikation kann beispielsweise einen Straßentyp (Weg, einspurige Straße, mehrspurige Straße, Autobahn etc.), eine erlaubte Höchstgeschwindigkeit, ein Überholverbot oder andere Parameter umfassen, die eine Verkehrsleitung über die Straße beeinflussen können. In einer weiteren Ausführungsform kann die Aktualisierung zusätzlich weitere Informationen über ein Umfeld der Straße umfassen. Solche Informationen können beispielsweise Gebäude entlang der Straße, Hausnummern der Gebäude, Parkplätze entlang der Straße, Einfahrten, Ausfahrten, Bushaltestellen, Taxistände etc. umfassen.

Es ist weiterhin bevorzugt, dass das Kraftfahrzeug auf der Trajektorie mittels einer automatisierten Fahrfunktion gesteuert wird. Einerseits ist für die automatisierte Fahrfunktion üblicherweise eine Abtastung des Umfelds des Kraftfahrzeugs erforderlich, sodass eine vorhandene Steuereinrichtung zur Abtastung der Straße verwendet werden kann, andererseits können insbesondere solche Informationen gezielt durch das Kraftfahrzeug aufgenommen werden, die für die nachfolgende Benutzung der Straße durch andere autonom oder teilautonom gesteuerte Kraftfahrzeuge von Nutzen sind. Dazu können beispielsweise Lage und Art von Referenzpunkten, Verkehrsschildern oder Bodenunebenheiten zählen.

Die Position des Kraftfahrzeugs auf der Trajektorie kann mittels eines augmentierten Satellitennavigationssystems bestimmt werden. Das Satellitennavigationssystem kann beispielsweise GPS, GLONNAS oder Galileo umfassen. An Bord des Kraftfahrzeugs ist ein Empfänger für Navigationssignale von Satelliten angeordnet. Zusätzliche Informationen, auf deren Basis die Bestimmung der Position des Kraftfahrzeugs genauer gemacht werden kann, können entweder von einem Satelliten oder einem terrestrischen Sender empfangen werden. Dadurch kann eine hochgenaue Positionierung des Kraftfahrzeugs durchgeführt werden, die im Bereich von ca. 1 bis 2 cm oder darunter liegen kann.

In einer weiteren Ausführungsform wird eine Position des Kraftfahrzeugs auf der Trajektorie bezüglich eines unveränderlichen Referenzobjekts bestimmt, dessen Position bekannt ist. Anders als beim Satellitennavigationssystem handelt es sich dabei üblicherweise um ein bodengebundenes Referenzobjekt im Sichtbereich des Kraftfahrzeugs. Das Referenzobjekt kann etwa ein markantes Gebäude, einen Wasserlauf oder einen speziell zu diesem Zweck errichteten Referenzpunkt umfassen. Das Referenzobjekt kann beispielsweise optisch abgetastet werden und die Position des Kraftfahrzeugs kann beispielsweise auf der Basis einer Entfernungsmessung oder mittels Triangulation bestimmt werden. In einer Ausführungsform wird eine drahtlose Kommunikation zwischen dem Kraftfahrzeug und dem Referenzobjekt etabliert, wobei eine Laufzeitmessung von Radiosignalen zwischen dem Kraftfahrzeug und dem Referenzobjekt zur Bestimmung eines Abstands verwendet werden. Das Referenzobjekt kann beispielsweise Teil einer Fahrzeug-zu-Infrastruktur-Kommunikation (C2I: Car to infrastructure) sein. Dabei können fortwährend Radiosignale vom Referenzobjekt ausgesandt werden. Die Radiosignale können Daten umfassen, die auf die Position des Referenzobjekts hinweisen.

Eine Vorrichtung an Bord eines Kraftfahrzeugs ist in Anspruch 9 angegeben.

Die Vorrichtung kann teilweise oder vollständig integriert mit einer Vorrichtung zur teilautonomen oder autonomen Steuerung des Kraftfahrzeugs ausgeführt sein. In einer Ausführungsform umfasst die Verarbeitungseinrichtung einen programmierbaren Mikrocomputer oder Mikrocontroller. Das oben beschriebene Verfahren kann dabei teilweise oder vollständig als Computerprogrammprodukt vorliegen und auf der Verarbeitungseinrichtung ausgeführt werden.

In einer Ausführungsform ist ein Kartenspeicher für die Kartendaten an Bord des Kraftfahrzeugs vorgesehen. Dabei können die lokal gespeicherten Kartendaten auf der Basis der Trajektorie bzw. Straße aktualisiert werden. Aktualisierungsinformationen können jedoch auch an andere Kraftfahrzeuge verteilt werden.

Ein System umfasst die oben beschriebene Vorrichtung und eine zentrale Einrichtung, die dazu eingerichtet ist, die Informationen von mehreren Kraftfahrzeugen zu empfangen und zu verarbeiten. Durch das Berücksichtigen von Informationen aus mehreren Quellen bzw. von mehreren Kraftfahrzeugen kann die Straße mit vergrößerter Sicherheit erkannt werden. In einer Ausführungsform kann auch erkannt werden, dass der Weg auf der Basis der nicht aktualisierten Kartendaten von keinem Kraftfahrzeug mehr befahren wird. In diesem Fall kann eine weitere Aktualisierung der Kartendaten erfolgen, die den Weg als unpassierbar markiert oder löscht.

Es ist bevorzugt, dass die zentrale Einrichtung dazu eingerichtet ist, aktualisierte Kartendaten oder eine Aktualisierung von Kartendaten an ein Kraftfahrzeug zu übermitteln. Die Übermittlung kann insbesondere drahtlos erfolgen, beispielsweise mittels eines Datenfunknetzes, einer Fahrzeug-zu-Infrastruktur-Kommunikation oder einer Fahrzeug-zu-Fahrzeug-Kommunikation. Eine Aktualisierung der Kartendaten kann insbesondere lokal im Bereich der Straße verstärkt durchgeführt werden. Die Aktualisierungsinformationen können an eine Vielzahl Kraftfahrzeuge übermittelt werden, sodass Fahrzeuge im Bereich der Straße verbessert navigieren oder automatisiert oder teilautomatisiert gesteuert werden können.

### Kurze Beschreibung der Figuren

Die Erfindung wird nun mit Bezug auf die beigefügten Figuren genauer beschrieben, in denen:
- Fig. 1: ein Kraftfahrzeug mit einer Steuervorrichtung;
- Fig. 2: ein Ablaufdiagramm eines Verfahrens; und
- Fig. 3: eine Illustration des Verfahrens von Fig. 2
darstellt.

### Genaue Beschreibung von Ausführungsbeispielen

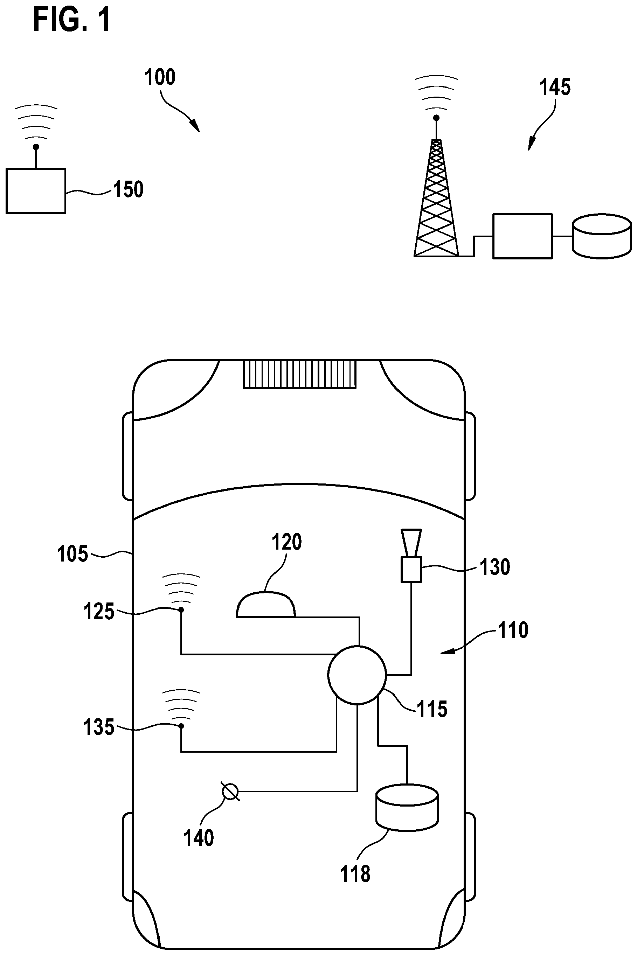

Fig. 1 zeigt ein System 100 zur Aktualisierung von Navigationsdaten. An Bord eines Kraftfahrzeugs 105 ist eine Vorrichtung 110 angebracht, die eine Verarbeitungseinrichtung 115, einen Datenspeicher 118 für Navigationsdaten insbesondere in Form von Kartendaten bezüglich eines Wege- oder Straßennetzes im Bereich des Kraftfahrzeugs 105 umfasst, eine Positioniereinrichtung 120, eine optionale Augmentiereinrichtung 125, eine Abtasteinrichtung 130 zur Abtastung eines Umfelds des Kraftfahrzeugs 105 sowie optional eine Kommunikationsschnittstelle 135 oder eine Datenschnittstelle 140 umfasst.

Das System 100 umfasst die Vorrichtung 110 an Bord des Kraftfahrzeugs 105 sowie eine zentrale Einrichtung 145, die zur Kommunikation mit der Vorrichtung 110, zur Verarbeitung von Informationen und bevorzugt zur Speicherung von Navigations- oder Kartendaten eingerichtet ist. Die Kartendaten umfassen üblicherweise Informationen über Straßen oder Wege eines Verkehrsnetzes und erlauben die Planung einer vorteilhaften Route zwischen einem Startpunkt und einem Zielpunkt. Eine Position auf den Kartendaten ist eindeutig einer Position des Kraftfahrzeugs 105 zugeordnet und auf der Basis einer bestimmten Position des Kraftfahrzeugs 105 kann üblicherweise mithilfe der Kartendaten bestimmt werden, auf welchem Abschnitt des Straßen- oder Wegenetzes sich das Kraftfahrzeug 105 befindet. Navigationsdaten können zusätzliche Informationen umfassen, die zur Navigation nützlich sein können, etwa entlang einer Straße oder eines Wegs gelegene Orte, mögliche Navigationsziele (Hotels, Parkhäuse, Gaststätten, Bahnhöfe etc.) oder ein Streckenverbot für einen Abschnitt des Netzes. Weiter ist in Fig. 1 ein Referenzobjekt 150 dargestellt, das optional ebenfalls zur Kommunikation mit der Vorrichtung 110 eingerichtet sein kann.

Die Abtasteinrichtung 130 ist dazu eingerichtet, ein Umfeld des Kraftfahrzeugs 105 abzutasten, insbesondere mittels einer optischen Kamera, eines Radarsystems oder eines LIDAR-Systems. Eine Verarbeitung der abgetasteten Informationen kann durch die Verarbeitungseinrichtung 115 erfolgen. Die Positioniereinrichtung 120 ist dazu eingerichtet, eine Position des Kraftfahrzeugs 105 möglichst im hochgenauen Bereich, also mit einem Fehler von kleiner als 5 cm, bevorzugt kleiner als 2 cm, weiter bevorzugt kleiner als 1 cm, zu bestimmen. Dazu kann die Positioniereinrichtung 120 beispielsweise einen Empfänger für Satellitennavigationssignale umfassen. Zusätzliche Signale zur Verbesserung der Genauigkeit der bestimmten Position können mittels der Augmentiereinrichtung 125 empfangen werden. Dadurch kann beispielsweise ein differenzielles Positionierverfahren realisiert werden, das als Differential GPS bekannt ist.

Mittels der Kommunikationsschnittstelle 135 kann eine drahtlose Kommunikation mit einem anderen Kraftfahrzeug 105, mit einer Infrastruktur oder unmittelbar mit der zentralen Einrichtung 145 erfolgen. In einer weiteren Ausführungsform kann die Position des Kraftfahrzeugs beispielsweise auch mittels einer lokalen Abtastung bestimmt werden. Dazu können mittels der Abtasteinrichtung 130 eines oder mehrere Referenzobjekte 150 im Umfeld des Kraftfahrzeugs 105 bestimmt werden. Sind die Positionen der Referenzobjekte 150 bekannt, so kann die Position des Kraftfahrzeugs 105 auf der Basis von Abständen zu den Referenzobjekten 150 oder wahrgenommenen Winkeln zwischen den Referenzobjekten 150 bestimmt werden. Eine Entfernungsmessung zu einem Referenzobjekt 150 kann mittels drahtloser Signale erfolgen. Dazu kann das Referenzobjekt 150 zur drahtlosen Kommunikation eingerichtet sein. In einer Ausführungsform übermittelt das Referenzobjekt 150 dabei Radiowellen, auf die eine Information aufmoduliert ist, die auf die Position des Referenzobjekts 150 hinweist. Das Referenzobjekt 150 kann Teil eines Fahrzeug-zu-Infrastruktur-Systems sein. In diesem Fall kann das Referenzobjekt 150 auch eine drahtlose Kommunikation mit der Vorrichtung 110 an die zentrale Einrichtung 145 weiterleiten. Die Weiterleitung kann über ein drahtloses oder drahtgebundenes Netz erfolgen, das Teil des Internets sein kann.

Über die Schnittstelle 140 kann die Verarbeitungseinrichtung 115 insbesondere einen Fahrzustand, Fahrparameter oder ein beabsichtigtes Manöver des Kraftfahrzeugs 105 abtasten. Dazu ist die Datenschnittstelle 140 bevorzugt mit einem oder mehreren weiteren Systemen an Bord des Kraftfahrzeugs 105 verbunden.

Es wird vorgeschlagen, die Vorrichtung 110 derart auszubilden, dass eine Abweichung der tatsächlichen Trajektorie des Kraftfahrzeugs 105 von einem im Datenspeicher 118 bekannten Weg erfasst und analysiert wird, um die Basis für eine mögliche Anpassung der Kartendaten im Datenspeicher 118 zu bilden.

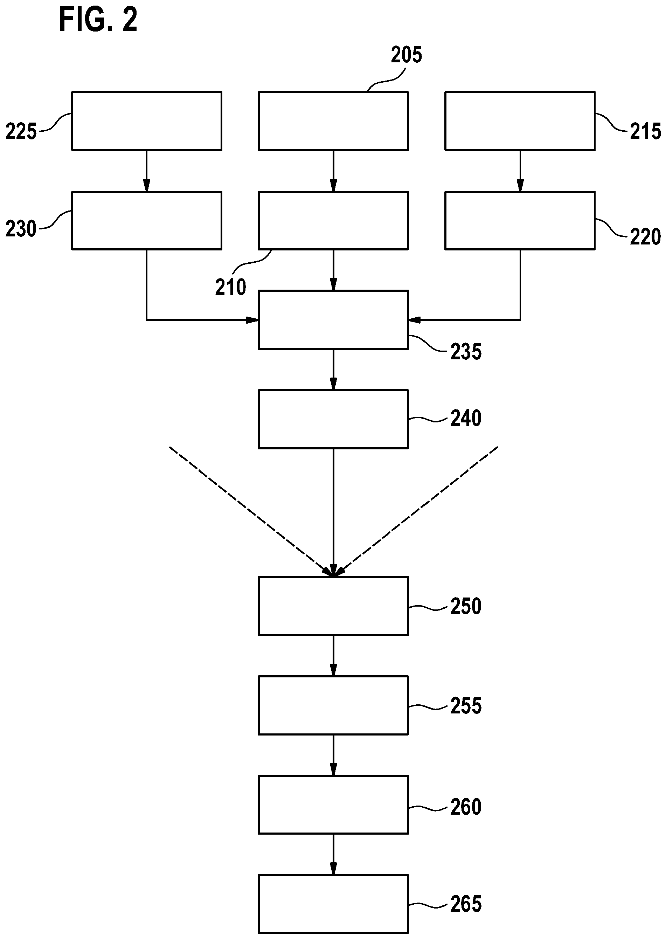

Fig. 2 zeigt ein Ablaufdiagramm eines Verfahrens 200. Das Verfahren 200 ist insbesondere zum Aktualisieren von Kartendaten ausgebildet. In einem Schritt 205 wird eine Position des Kraftfahrzeugs 105 bestimmt. Auf der Basis der Position wird in einem Schritt 210 eine Trajektorie des Kraftfahrzeugs 105 bestimmt. In einem Schritt 215 wird, bevorzugt parallel zur Positionsbestimmung im Schritt 205, ein Umfeld des Kraftfahrzeugs 105 abgetastet. Auf der Basis der Abtastung wird in einem Schritt 220 bestimmt, dass sich das Kraftfahrzeug 105 auf einer Straße befindet. Dabei ist eine Straße definiert als ein befestigter Weg, der mit einem Wegenetz, das im Datenspeicher 118 gespeichert ist, verbunden ist. Weitere Kriterien für die Klassifikation einer Umgebung des Kraftfahrzeugs 105 als Straße können Anzeichen umfassen, dass sich die Straße zur wiederholten Benutzung durch ein Kraftfahrzeug 105 eignet. Beispielsweise können eine Fahrbahnmarkierung, ein Verkehrsschild oder eine Ampel Anzeichen für eine Straße sein.

In einem Schritt 225 werden Informationen bezüglich Wege im Bereich des Kraftfahrzeugs 105 aus dem Datenspeicher 118 bereitgestellt. Weicht die Position des Kraftfahrzeugs 105 von den Positionen der Verläufe aller bekannten Wege ab, so kann sich das Kraftfahrzeug 105 auf einer unbekannten Straße befinden. Es ist bevorzugt, dass in einem Schritt 230 ein Weg bestimmt wird, der auf der Basis der Kartendaten im Datenspeicher 118 vom Kraftfahrzeug 105 hätte befahren werden müssen. Dazu kann insbesondere bestimmt werden, in welchem Abschnitt sich die Trajektorie von den bekannten Wegen unterscheidet. Die Abweichung der Trajektorie von einem oder mehreren Wegen wird in einem Schritt 235 durchgeführt.

Auf der Basis der Abweichung kann eine Aktualisierung von Kartendaten für das Kraftfahrzeug 105 unmittelbar erfolgen. Es ist jedoch bevorzugt, dass die seitens des Kraftfahrzeugs 105 bestimmte Abweichung in einem Schritt 240 an die zentrale Einrichtung 145 übermittelt und dort weiterverarbeitet wird.

In einem Schritt 250 wird die Abweichung aus dem Schritt 240 empfangen. Zusätzlich können noch weitere Abweichungen empfangen werden, die durch andere Kraftfahrzeuge 105 bestimmt wurden. In einem Schritt 255 werden die empfangenen Abweichungen ausgewertet. Dabei kann insbesondere berücksichtigt werden, dass eine Änderung einer möglichen Verkehrsführung insbesondere dann wahrscheinlich ist, wenn sie durch mehrere Kraftfahrzeuge an der gleichen Stelle bestimmt wurde. In einem Schritt 260 erfolgt eine Auswertung der empfangenen Abweichungen. Dabei wird bevorzugt eine Plausibilität der empfangenen Abweichungen durch Vergleich der Daten untereinander geprüft. Unplausible Informationen können verworfen werden. Die Aktualisierung kann unmittelbar an Kartendaten durchgeführt werden, die seitens der zentralen Einrichtung 145 gespeichert sind. Dies ist beispielsweise vorteilhaft, wenn der Schritt 225 ein Abrufen von Kartendaten von der zentralen Einrichtung 145 umfasst. In einer weiter bevorzugten Ausführungsform wird eine Aktualisierung in einem Schritt 265 an das Kraftfahrzeug 105 übermittelt und im lokalen Datenspeicher 118 eingepflegt. Dabei kann die Aktualisierung ein Hinzufügen oder ein Löschen einer Straße oder eines Verkehrsknotens umfassen. Im Fall einer Verlegung einer Straße, beispielsweise aufgrund einer Baustelle kann eine alte Straße gelöscht und eine neue Straße hinzugefügt werden. Das Ändern einer Straßenführung ist insbesondere dann plausibel, wenn die Abweichung der Trajektorie des Kraftfahrzeugs 105 vom nächstliegenden Weg gering ist. Der Unterschied kann beispielsweise kleiner als die Straßenbreite sein oder unterhalb eines vorbestimmten Schwellenwerts liegen. Der Schwellenwert kann beispielsweise 10, 20 oder 50 m betragen.

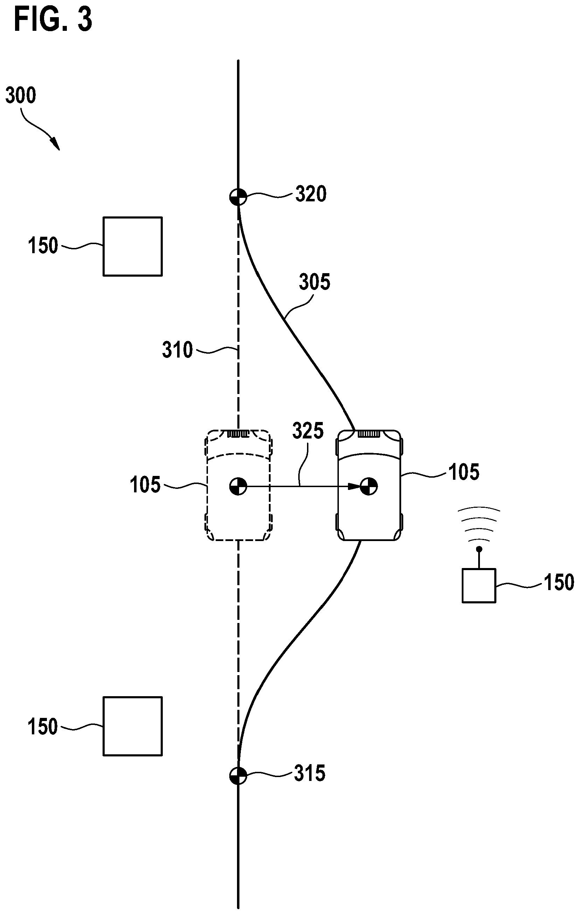

Fig. 3 zeigt eine Illustration 300 des Verfahrens 200 von Fig. 2. Das Kraftfahrzeug 105 befindet sich auf einer Trajektorie 305, die mit einer durchgezogenen Linie dargestellt ist. Ein nächstgelegener Weg 310 beschreibt eine weitere Trajektorie, die das Kraftfahrzeug 105 nehmen müsste, wenn es sich nur auf Wegen befände, die im Datenspeicher 118 vermerkt sind. Der Weg 310 ist Teil eines Verkehrsnetzes, über welches Informationen im Datenspeicher 118 abgelegt sind. Die Trajektorie 305 weicht in einem Abschnitt zwischen einem ersten Punkt 315 und einem zweiten Punkt 320 vom Weg 310 ab. Eine maximale Abweichung ist als Pfeil 325 eingezeichnet.

Wird seitens des Kraftfahrzeugs 105 bestimmt, dass die Trajektorie 305 auf einer Straße verläuft, so können die Kartendaten im Datenspeicher 118 dahingehend abgeändert werden, dass die neue Straße den Daten hinzugefügt wird. Der alte Weg 310 kann aus den Kartendaten gelöscht werden, wenn er über eine vorbestimmte Zeit nicht mehr benutzt wird. Die Löschung kann auch stattfinden, wenn die Abweichung 325 unter einem vorbestimmten Schwellenwert liegt. Der Weg 310 kann ebenfalls gelöscht werden, wenn mittels der Abtasteinrichtung 130 festgestellt wird, dass er nicht mehr besteht oder sein Befahren nicht mehr zulässig ist.

Die Position des Kraftfahrzeugs 105 kann, wie oben genauer beschrieben wurde, bezüglich eines oder mehrerer Referenzobjekte 150 bestimmt werden. In einer weiteren Ausführungsform können Informationen über eines oder mehrere Referenzobjekte 150 durch die Abtasteinrichtung 130 aufgenommen und als Umgebungsinformationen im Datenspeicher 118 abgelegt werden. Veraltete Umgebungsinformationen können dabei gelöscht werden.

## Patentansprüche

1. Verfahren (200), folgende Schritte umfassend:
- Bestimmen (205, 210) einer Trajektorie (305) eines Kraftfahrzeugs (105);
- Abtasten (215) eines Umfelds des Kraftfahrzeugs (105) entlang der Trajektorie (305);
- Bestimmen (220), auf der Basis der Abtastung, dass die Trajektorie (305) entlang einer Straße verläuft;
- Bestimmen (230), auf der Basis von Kartendaten, eines bekannten Wegs (310) zwischen zwei Punkten der Trajektorie (305);
- Bestimmen (235) einer Abweichung (325) der Trajektorie (305) von dem bekannten Weg; und
- Aktualisieren der Kartendaten auf der Basis der Trajektorie (305), falls die Trajektorie (305) entlang einer Straße verläuft und die Trajektorie (305) vom bekannten Weg (310) abweicht.

2. Verfahren (200) nach Anspruch 1, wobei das Abtasten (215) mittels einer Abtasteinrichtung (130) erfolgt.

3. Verfahren (200) nach Anspruch 1 oder 2, wobei auf der Basis der Abtastung bestimmt (220, 255) wird, dass die Benutzung der Straße durch das Kraftfahrzeug (105) zulässig ist.

4. Verfahren (200) nach einem der vorangehenden Ansprüche, wobei die Kartendaten nur aktualisiert werden, falls eine Vielzahl übereinstimmender Abweichungen (325) bestimmt wurde.

5. Verfahren (200) nach einem der vorangehenden Ansprüche, wobei die Aktualisierung eine Klassifikation der Straße umfasst.

6. Verfahren (200) nach einem der vorangehenden Ansprüche, wobei das Kraftfahrzeug (105) auf der Trajektorie (305) mittels einer automatisierten Fahrfunktion gesteuert wird.

7. Verfahren (200) nach einem der vorangehenden Ansprüche, wobei eine Position des Kraftfahrzeugs (105) auf der Trajektorie (305) mittels eines augmentierten Satellitennavigationssystems bestimmt wird.

8. Verfahren (200) nach einem der vorangehenden Ansprüche, wobei eine Position des Kraftfahrzeugs (105) auf der Trajektorie (305) bezüglich eines unveränderlichen Referenzobjekts (150) bestimmt wird, dessen Position bekannt ist.

9. Vorrichtung (110) an Bord eines Kraftfahrzeugs (105), folgendes umfassend:
- eine Positioniereinrichtung (120, 125) zur Bestimmung einer Trajektorie (305) des Kraftfahrzeugs (105);
- eine Abtasteinrichtung (130) zur Abtastung eines Umfelds des Kraftfahrzeugs (105) entlang der Trajektorie (305);
- eine Verarbeitungseinrichtung (115), die dazu eingerichtet ist:
- auf der Basis der Abtastung zu bestimmen, dass die Trajektorie (305) entlang einer Straße verläuft;
- auf der Basis von Kartendaten einen bekannten Weg (310) zwischen zwei Punkten der Trajektorie (305) zu bestimmen; und
- eine Abweichung (325) der Trajektorie (305) von dem bekannten Weg (310) zu bestimmen;
- sowie eine Schnittstelle (135) zur Übermittlung von Informationen, um ein Aktualisieren der Kartendaten auf der Basis der Trajektorie (305) zu ermöglichen, falls die Trajektorie (305) entlang einer Straße verläuft und die Trajektorie (305) vom bekannten Weg (310) abweicht.

10. System (100), umfassend eine Vorrichtung (110) nach Anspruch 9 und eine zentrale Einrichtung (145), die dazu eingerichtet ist, die Informationen von mehreren Kraftfahrzeugen (105) zu empfangen und zu verarbeiten.

11. System (100) nach Anspruch 10, wobei die zentrale Einrichtung (145) dazu eingerichtet ist, aktualisierte Kartendaten oder eine Aktualisierung von Kartendaten an ein Kraftfahrzeug (105) zu übermitteln.

## Claims

1. Method (200), comprising the following steps:
- determining (205, 210) a trajectory (305) of a motor vehicle (105);
- scanning (215) an area around the motor vehicle (105) along the trajectory (305);
- determining (220), on the basis of the scanning, that the trajectory (305) extends along a road;
- determining (230), on the basis of map data, a known path (310) between two points of the trajectory (305) ;
- determining (235) a deviation (325) of the trajectory (305) from the known path; and
- updating the map data on the basis of the trajectory (305) if the trajectory (305) extends along a road and the trajectory (305) deviates from the known path (310) .

2. Method (200) according to Claim 1, scanning (215) being performed by means of a scanning unit (130).

3. Method (200) according to Claim 1 or 2, it being determined (220, 255) on the basis of the scanning that it is permissible for the motor vehicle (105) to use the road.

4. Method (200) according to one of the preceding claims, the map data only being updated if a multiplicity of coinciding deviations (325) have been determined.

5. Method (200) according to one of the preceding claims, the updating comprising classification of the road.

6. Method (200) according to one of the preceding claims, the motor vehicle (105) being controlled on the trajectory (305) by means of an automated driving function.

7. Method (200) according to one of the preceding claims, the position of the motor vehicle (15) on the trajectory (305) being determined by means of an augmented satellite navigation system.

8. Method (200) according to one of the preceding claims, a position of the motor vehicle (105) on the trajectory (305) being determined with respect to an unchangeable reference object (150), the position of which is known.

9. Device (110) on board a motor vehicle (105), comprising the following:
- a positioning unit (120, 125) for determining a trajectory (305) of the motor vehicle (105);
- a scanning unit (130) for scanning an area around the motor vehicle (105) along the trajectory (305);
- a processing unit (115), which is configured:
- to determine on the basis of the scanning that the trajectory (305) extends along a road,
- to determine on the basis of map data a known path (310) between two points of the trajectory (305); and
- to determine a deviation (325) of the trajectory (305) from the known path (310);
- and an interface (135) for transmitting items of information in order to allow updating of the map data on the basis of the trajectory (305) if the trajectory (305) extends along a road and the trajectory (305) deviates from the known path (310).

10. System (100), comprising a device (110) according to Claim 9 and a central unit (145), which is configured to receive and process the items of information from multiple motor vehicles (105).

11. System (100) according to Claim 10, the central unit (145) being configured to transmit updated map data or an update of map data to a motor vehicle (105).

## Revendications

1. Procédé (200), comprenant les étapes suivantes consistant à :
- déterminer (205, 210) une trajectoire (305) d'un véhicule automobile (105) ;
- balayer (215) un entourage du véhicule automobile (105) le long de la trajectoire (305) ;
- sur la base du balayage, déterminer (220) que la trajectoire (305) s'étend le long d'une route ;
- sur la base de données cartographiques, déterminer (230) un trajet connu (310) entre deux points de la trajectoire (305) ;
- déterminer (235) une déviation (325) de la trajectoire (305) par rapport au trajet connu ; et
- mettre à jour les données cartographiques sur la base de la trajectoire (305) si la trajectoire (305) s'étend le long d'une route et la trajectoire (305) dévie du trajet connu (310).

2. Procédé (200) selon la revendication 1, dans lequel le balayage (215) est effectué au moyen d'un dispositif de balayage (130).

3. Procédé (200) selon la revendication 1 ou 2, dans lequel il est déterminé (220, 255) sur la base du balayage que l'utilisation de la route par le véhicule automobile (105) est admissible.

4. Procédé (200) selon l'une quelconque des revendications précédentes, dans lequel les données cartographiques ne sont mises à jour que si une pluralité de déviations (325) concordantes a été déterminée.

5. Procédé (200) selon l'une quelconque des revendications précédentes, dans lequel la mise à jour comprend une classification de la route.

6. Procédé (200) selon l'une quelconque des revendications précédentes, dans lequel le véhicule automobile (105) est piloté sur la trajectoire (305) au moyen d'une fonction de conduite automatisée.

7. Procédé (200) selon l'une quelconque des revendications précédentes, dans lequel une position du véhicule automobile (105) sur la trajectoire (305) est déterminée au moyen d'un système de navigation par satellite augmenté.

8. Procédé (200) selon l'une quelconque des revendications précédentes, dans lequel une position du véhicule automobile (105) sur la trajectoire (305) est déterminée par rapport à un objet de référence invariable (150) dont la position est connue.

9. Dispositif (110) à bord d'un véhicule automobile (105), comprenant ce qui suit :
- un équipement de positionnement (120, 125) pour déterminer une trajectoire (305) du véhicule automobile (105) ;
- un équipement de balayage (130) pour balayer un entourage du véhicule automobile (105) le long de la trajectoire (305) ;
- un équipement de traitement (115) qui est aménagé pour :
- sur la base du balayage, déterminer que la trajectoire (305) s'étend le long d'une route ;
- sur la base de données cartographiques, déterminer un trajet connu (310) entre deux points de la trajectoire (305) ; et
- déterminer une déviation (325) de la trajectoire (305) par rapport au trajet connu (310) ;
- ainsi qu'une interface (135) pour transmettre des informations afin de permettre une mise à jour des données cartographiques sur la base de la trajectoire (305) si la trajectoire (305) s'étend le long d'une route et la trajectoire (305) dévie par rapport au trajet connu (310).

10. Système (100), comprenant un dispositif (110) selon la revendication 9 et un équipement central (145) qui est aménagé pour recevoir et traiter les informations provenant de plusieurs véhicules automobiles (105).

11. Système (100) selon la revendication 10, dans lequel l'équipement central (145) est aménagé pour transmettre des données cartographiques mises à jour ou une mise à jour de données cartographiques à un véhicule automobile (105).
